# EUROPEAN PATENT APPLICATION

(11) **EP 1 093 243 A1**
(43) Date of publication of application: **18.04.2001**
(21) Application number: 99402487.5
(22) Date of filing: 11.10.1999
(51) Int. Cl.: H04B 7/26

(54) **Allocation of resources in a CDMA cell**

(71) Applicant: ALCATEL, 75008 Paris (FR)
(72) Inventor: Gourgue, Frédéric, 75017 Paris (FR)
(74) Representative: Lamoureux, Bernard

(57) **Abstract**

The invention concerns a method of transmitting digital data in a code-division multiple access wireless communication system having a plurality of carriers for transmitting call signals, said method comprising:
- a step of defining a carrier associated with a plurality of signals, and
- a step of transmitting signals on each carrier,
characterized in that the step of defining carriers associated with the signals satisfies predefined distribution rules.

## Description

The invention concerns the field of telecommunication techniques using code-division multiple access (CDMA). The invention is more particularly concerned with the problem of allocating CDMA resources when several frequencies are available for transmitting services of different kinds.

Systems using coded communication channels are well known to the skilled person. The CDMA system transmits coded signals on a particular frequency called the carrier. These systems are particularly suitable when a plurality of transmitter-receivers communicate with a base transceiver station. The base transceiver station has a set of frequencies available for transmitting all of the communication channels, each channel having to be allocated only one frequency. On a given frequency, each channel then has its own spreading sequence and the various spreading sequences are in principle mutually orthogonal to enable the original signal to be recovered.

For a given frequency, on transmission in the downlink direction, the signals corresponding to each channel characterized by its own spreading sequence are summed. The resulting signal is then modulated and amplified to be transmitted to the receivers via an antenna. Each receiver operating at the frequency concerned demodulates the received signal and combines it with the spreading sequence corresponding to the data addressed to that receiver. The other signals included in the summed signal constitute noise as far as the receiver of a particular channel is concerned. The information transmitted can consist in various classes of traffic characterized by different spreading factors.

Different carrier frequencies are usually employed to transmit a greater quantity of information. Thus the skilled person knows how to mix classes of traffic, for example voice traffic, 14.4 kbit/s traffic, 144 kbit/s traffic and 384 kbit/s traffic on all carriers available at the base transceiver station, each class of traffic being characterized by a criterion such as its spreading factor. The mixing is done without reference to the class of traffic concerned. However, this mixing of different classes of traffic cannot optimize the data transfer capacity and can entail too many reallocations of the code tree, the code tree concept and the need for reallocation being described in patent WO 95/03652 (Walsh sequence generation for variable data rates, Qualcomm Incorporated), for example. When a signal is transmitted, the various signals are allocated in the code tree according to their spreading factor. In particular, signals necessitating a great deal of transmission resources have a small spreading factor and it is possible to allocate them a code in the tree only if the sub-tree starting from that code is not occupied by a code allocated to another signal (the construction of the tree is such that a code in the sub-tree corresponds to a larger spreading factor than the code at the root). In conventional use, where the various classes of traffic are mixed, the code tree is filled at random because of successive allocations/de-allocations. It can therefore happen that allocating a code corresponding to a low spreading factor makes it necessary to move codes with a greater spreading factor in order to free up a sub-tree starting from a required spreading factor. This operation, referred to as reallocation, is burdensome because it necessitates sending messages to each mobile whose code is moved.

The invention greatly reduces the impact of this difficulty by proposing a method of managing the allocation of resources which limits random occupation of the tree and therefore limits the need for reallocation.

The invention concerns a method of transmitting digital data in a CDMA wireless communication system having a plurality of carriers for transmitting communication signals. The method includes a step of defining a carrier associated with a plurality of signals, a step of coding signals associated with the same carrier and a step of transmitting the signals resulting from coding on each carrier. The transmission process and where applicable the signal correcting code are known in themselves.

The invention is characterized in that the step of defining carriers associated with the signals satisfies predefined distribution rules. The predefined rules concern the type of service transmitted on the carrier or the spreading factor associated with the service, for example.

The distribution rules advantageously define a carrier to which each type of service is preferentially allocated if said carrier is not overloaded.

In a preferred embodiment of the invention, each type of service has a list in order of preference of the carriers to which it can be allocated. This embodiment specifies the distribution to the carriers in all cases. This optimizes the management of the various services and enables the various signals to be processed more quickly.

The invention also concerns a system for transmitting digital data in a code-division multiple access wireless communication system having a plurality of carriers for transmitting communication signals. The system includes means for defining a carrier associated with a plurality of signals and means for transmitting signals on each carrier and is characterized in that it includes means for storing predefined rules for distribution of the signals to the carriers.

The system advantageously includes means for storing carriers to which each type of service is preferentially allocated if said carriers are not overloaded.

In a preferred embodiment of the invention, the system stores a list in order of preference of the carriers to which each type of service can be allocated.

In one embodiment of the invention, the system includes means for storing a set of preferred spreading factors associated with each carrier. It can also include means for storing a list in order of preference of the carriers with which each spreading factor can be associated.

In the case of two carriers and two services, each service is associated with a carrier.

In one embodiment of the invention, the distribution rules associate a set of preferred spreading factors with each carrier and each service is preferentially allocated to the carrier associated with its spreading factor.

Each spreading factor advantageously has a list in order of preference of the carriers with which it can be associated.

For example, if three carriers numbered 1 to 3 are available and if the available spreading factors are 4, 8, 16, 32, 64, 128 and 256, then the services whose spreading factor is from 4 to 8 can be allocated to carrier 1, the services whose spreading factor is from 16 to 32 to carrier 2 and the other services to carrier 3.

If a call arrives with a class of service associated with a frequency that is saturated, the call can be allocated to another carrier. Two options are then available when the carrier is no longer saturated:
- to optimize the performance of the system, the call allocated to another frequency can be reallocated to its preferred frequency by switching between the frequencies, or
- to limit the transmission of signalling, the call can remain on the allocated frequency.

The choice is preferably made when the network is implemented and is modified only at the time of a global modification of the network. The method of the invention is easy to implement for the receiving means, whether they are fixed or mobile.

## Claims

1. A method of transmitting digital data in a code-division multiple access wireless communication system having a plurality of carriers for transmitting call signals, said method comprising:
- a step of defining a carrier associated with a plurality of signals, and
- a step of transmitting signals on each carrier,
characterized in that the step of defining carriers associated with the signals satisfies predefined distribution rules.

2. A method of transmitting digital data according to claim 1 characterized in that the distribution rules define a carrier to which each type of service is preferentially allocated if said carrier is not overloaded.

3. A method of transmitting digital data according to claim 2 characterized in that each type of service has a list in order of preference of the carriers to which it can be allocated.

4. A method of transmitting digital data according to any one of the preceding claims characterized in that the distribution rules associate a set of preferred spreading factors with each carrier and in that each service is preferentially allocated to the carrier associated with its spreading factor.

5. A method of transmitting digital data according to claim 4 characterized in that each spreading factor has a list in order of preference of the carriers with which it can be associated.

6. A system for transmitting digital data in a code-division multiple access wireless communication system having a plurality of carriers for transmitting communication signals, said system including means for defining a carrier associated with a plurality of signals and means for transmitting signals on each carrier, characterized in that it includes means for storing predefined rules for distribution of the signals to the carriers.

7. A system according to claim 6 characterized in that it includes means for storing carriers to which each type of service is preferentially allocated if said carriers are not overloaded.

8. A system according to claim 7 characterized in that it includes means for storing a list in order of preference of carriers to which each type of service can be allocated.

9. A system according to any one of claims 6 to 8 characterized in that it includes means for storing a set of preferred spreading factors associated with each carrier.

10. A system according to claim 9 characterized in that it includes means for storing a list in order of preference of the carriers with which each spreading factor can be associated.
